Europäisches Patentamt

European Patent Office

Office européen des brevets

(11) Veröffentlichungsnummer : **0 081 600**
**B1**

(19)

(12) **EUROPÄISCHE PATENTSCHRIFT**

(45) Veröffentlichungstag der Patentschrift :
05.03.86

(51) Int. Cl.⁴ : **A 01 B 33/06**

(21) Anmeldenummer : **81110360.5**

(22) Anmeldetag : **11.12.81**

(54) **Kreiselegge.**

(43) Veröffentlichungstag der Anmeldung :
**22.06.83 Patentblatt 83/25**

(45) Bekanntmachung des Hinweises auf die Patenterteilung : **05.03.86 Patentblatt 86/10**

(84) Benannte Vertragsstaaten :
**AT BE CH DE FR GB IT LI NL**

(56) Entgegenhaltungen :
CH-A-  545 582
DE-A- 2 139 974
DE-A- 2 162 433
DE-A- 2 531 911
DE-C-  891 633
DE-U- 7 119 735
DE-U- 7 827 326

(73) Patentinhaber : **Rabewerk Heinrich Clausing**
**D-4515 Bad Essen 1 (DE)**

(72) Erfinder : **Warnking, Richard**
**Klockenpatt 5**
**D-4515 Bad Essen 1 (DE)**

(74) Vertreter : **Schlee, Richard et al**
**Patentanwälte Dipl.-Ing. R. Schlee Dipl.-Ing. A. Missling Bismarckstrasse 43**
**D-6300 Giessen 1 (DE)**

## Beschreibung

Die Erfindung bezieht sich auf eine Kreiselegge mit mehreren in einer quer zur Fahrtrichtung verlaufenden Reihe angeordneten Werkzeugkreiseln, die in einem Maschinengestell gelagerte Wellen aufweisen, an denen sich Zinken tragende Werkzeugträger befinden, deren Umfangsfläche über mindestens einen Teil ihrer Höhe als Rotationsfläche ausgebildet ist, wobei am Maschinengestell vor den Werkzeugträgern ein die Werkzeugträger abdeckender Schutzschirm angeordnet ist (DE-A1-25 31 911).

Die Werkzeugträger und die Wellen einer Kreiselegge sind wegen des Zwangsantriebes der Kreisel dadurch gefährdet, daß feste Stücke, insbesondere Steine, zwischen die Werkzeugträger und das Gestell der Maschine eingeklemmt werden. Das Einklemmen von Steinen und dergleichen kann leicht zu einer Beschädigung der Werkzeugträger, der Zinkenbefestigung und des Gestells führen, das meist als Getriebekasten ausgebildet ist. Hierbei kann es auch vorkommen, daß Kreiselwellen und/oder deren Lagerung beschädigt werden. Man hat deshalb Schutzvorrichtungen für die Werkzeugträger geschaffen, die das Eindringen von festen Stücken zwischen Gestell und Werkzeugträger verhindern sollen.

Bekannt sind Bodenbearbeitungsgeräte, bei denen der Werkzeugträger von einem Gehäuse umgeben ist, das kreisrunde Öffnungen aufweist (DE-C-891 633, DE-A1-25 31 911). Jeder Werkzeugträger hat eine kreisrunde Scheibe, die innerhalb einer zugeordneten kreisrunden Öffnung rotiert. Bei dem Gerät nach der DE-C-891 633 sind die kreisrunden Öffnungen direkt im Getriebegehäuse vorgesehen, während bei dem Gerät nach der DE-A1-25 31 911 unterhalb eines Getriebekastens ein weiterer Kasten angeordnet ist, der die Werkzeugträger umgibt. In beiden Fällen sind umfangreiche Montagearbeiten erforderlich, um die Werkzeugträger freizulegen.

Bei der Kreiselegge nach der DE-A1-25 31 911 haben die Werkzeugträger einen relativ kleinen Durchmesser, so daß die Gesamtheit der Werkzeugträger keine zusammenhängende Schutzwand bildet. Der Schutz des Maschinengestells wird vielmehr weitgehend durch die untere Wand des die Werkzeugträger umgebenden Gehäuses gebildet. Diese Wand hat nur relativ kleine Löcher für den Durchtritt der Werkzeugträger. Die Zinken der Kreiselegge nach der letztgenannten Druckschrift sind an der Unterseite der Werkzeugträger mittels Bolzen befestigt, die durch Augen und durch gewendelte Teile der Zinken hindurchgesteckt sind. Die Zinkenbefestigung ist so beschaffen, daß die Werkzeugträger nicht von oben her zugänglich sein müssen, um Zinken auswechseln zu können. Das Schutzgehäuse ist mit den gleichen Schrauben gehalten, mit denen auch der Deckel des Getriebekastens an diesem befestigt ist. Eine Demontage des Schutzgehäuses ist mit einer sehr weitgehenden Demontage der Kreiselegge verbunden, zumal die oberen Lager der Kreiselegge im Deckel des Getriebekastens befestigt sind.

Der Erfindung liegt die Aufgabe zugrunde, eine Kreiselegge der eingangs genannten Art so auszubilden, daß bei guter Sicherung gegen Eindringen von Steinen und dergleichen zwischen Werkzeugträger und Gestell die Werkzeugträger ohne vorherige Demontagearbeiten zugänglich sind und eventuell eingedrungene kleinere feste Körper wieder austreten können, wobei auch die Befestigung der Zinken gut geschützt sein soll.

Diese Aufgabe wird nach der Erfindung dadurch gelöst, daß der Schutzschirm eine in der Ebene der Werkzeugträger verlaufende Anpassungswand aufweist, deren hinterer Rand bis nahe an die Rotationsflächen herangeführt ist und zu diesem Zweck kreisbogenförmige Ausbuchtungen aufweist, wobei die Anpassungswand nur bis zu der Ebene reicht oder vor der Ebene endet, in der die geometrischen Achsen der Wellen liegen und daß Befestigungselemente, z. B. Schrauben für die Zinken der Werkzeugträger diese durchgreifen.

Bei einer so ausgebildeten Kreiselegge ist der vordere Bereich des Zwischenraumes zwischen Werkzeugträgern und Unterseite des Maschinengestells durch eine im wesentlichen zusammenhängende Fläche abgedeckt, so daß in diesem besonders gefährdeten Bereich keine Steine und dergleichen in diesen Zwischenraum gelangen können. Trotzdem sind die Werkzeugträger frei zugänglich. Dadurch ist z. B. das Auswechseln beschädigter Zinken mit minimalem Montageaufwand möglich, und zwar auch bei den besonders vorteilhaften Zinkenbefestigungen, bei denen Befestigungselemente, wie z. B. Schrauben, den Träger insgesamt durchgreifen. Die freie Zugänglichkeit der Werkzeugträger gestattet das Hindurchstecken der Befestigungselemente bequem. Man kann deshalb auf spezielle Zinkenbefestigungen verzichten, wie sie angewendet werden müßten, wenn die Werkzeugträger von oben her nicht zugänglich wären. Auch die Demontage eines gesamten Werkzeugträgers ist ohne vorherigen Entfernung von Abdeckungen möglich, ebenso das Auswechseln von Kreiselwellen. Die Zinken können bei dem erfindungsgemäßen Gerät bis auf eine relativ kleine Länge abgenutzt werden, weil durch die Abdeckung der Werkzeugträger und des Gestells Beschädigungen auch bei tiefer Lage des Gerätes nicht entstehen.

Die genannte Rotationsfläche ist vorzugsweise eine Zylinderfläche (Anspruch 2), wobei der Werkzeugträger insgesamt scheibenförmig ausgebildet sein kann (Anspruch 3). Eine solche Form des Werkzeugträgers ist besonders einfach. Er besteht im Prinzip aus einer kreisrunden Platte aus Stahl. Unter die Erfindung fallen aber auch andere Formen des Werkzeugträgers. Wesentlich ist, daß der Werkzeugträger an einer Stelle als Rotationsfläche ausgebildet ist, die sich über den gesamten Umfang erstreckt.

Vorzugsweise ist der Durchmesser der Werkzeugträger so groß wie möglich (Anspruch 4), d. h. so groß, daß sich benachbarte Werkzeugträger annähernd berühren. Hierbei erreicht man eine optimale Abdeckung des Raumes zwischen Werkzeugträgern und Maschinengestell (Getriebekasten) auch noch im Bereich hinter der Anpassungswand. Die Anpassungswand ist so nahe wie möglich an die Rotationsflächen herangeführt (Anspruch 5). Es ist leicht möglich, eine so geringe Spaltbreite einzuhalten, daß keine festen Stücke von schädlicher Größe durch den Spalt hindurchtreten können.

Der Schutzschirm kann verschieden ausgebildet sein, wofür in den Ansprüchen 6 und 7 Beispiele angegeben sind. Eine Konstruktion gemäß Anspruch 6 in Form eines Winkelbleches ist besonders billig und ist für kleinere Kreiseleggen gut geeignet. Eine Konstruktion nach Anspruch 7 ist besonders stabil und eignet sich demgemäß insbesondere für Kreiseleggen mit großer Arbeitsbreite.

Der Schutzschirm ist vorzugsweise gemäß den Ansprüchen 8 und 9 befestigt, was im Bedarfsfalle eine leichte Entfernung des Schutzschirmes vom Maschinengestell ermöglicht.

Die Zinken ragen vorzugsweise über die Werkzeugträger hinaus (Anspruch 10). Die Erfindung ist auch anwendbar bei Kreiseleggen, bei denen die Zinken Bahnen beschreiben, deren Durchmesser größer ist als der Teilungsabstand der Kreisel (Anspruch 11). Geeignete Zinkenformen für solche Kreiseleggen sind in den Ansprüchen 12 bis 14 angegeben. Die Zinkenformen nach den Ansprüchen 13 und 14 haben den besonderen Vorteil, daß die Gefahr des Einklemmens fester Körper im Bereich unterhalb der Werkzeugträger verringert wird.

Eine Versteifung des Maschinengestells für eine Maschine mit großer Arbeitsbreite ist im Anspruch 15 angegeben. Mit Hilfe einer solchen Versteifung wird gewährleistet, daß die Anpassungswand stets optimal auf die Werkzeugträger ausgerichtet ist. Wenn die Streben im Bereich der Befestigung des Schutzschirmes oder direkt an dieser Befestigung angreifen, werden, auf den Schutzschirm ausgeübte Stöße direkt in die Aufhängung des Gerätes eingeleitet, wodurch elastische Deformationen des Getriebekastens vermieden werden.

Die relative Bemessung der Spalte, die im Anspruch 16 angegeben ist, hat den Vorteil, daß durch den Spalt zwischen Anpassungswand und Werkzeugträger eingedrungene kleine Körper wieder ausgeworfen werden können, ohne eingeklemmt zu werden.

In der Zeichnung ist ein Ausführungsbeispiel der Erfindung dargestellt. Es zeigen :

Figur 1 eine Vorderansicht einer Kreiselegge, wobei beiderseits der vertikalen Mittellinie zwei verschiedene Ausführungsformen dargestellt sind,

Figur 2 einen Vertikalschnitt nach Linie II-II in Fig. 1,

Figur 3 eine teilweise Unteransicht der Kreiselegge in Richtung des Pfeiles III in Fig. 1 und

Figur 4 einen isolierten Werkzeugkreisel mit geraden schrägen Zinken.

Die Kreiselegge hat ein Gestell 1 in Form eines Getriebekastens, in dem sechs Kreisel 2a bis 2f drehbar gelagert sind. Jeder Kreisel hat eine Welle 3, die innerhalb des Getriebekastens 1 gelagert ist und durch den horizontalen Boden 4 des Getriebekastens herausragt. Mit jeder Kreiselwelle 3 ist ein Stirnzahnrad 5 drehfest verbunden. Die Stirnzahnräder benachbarter Kreisel sind miteinander im Eingriff, so daß eine Kupplung aller Kreisel untereinander gegeben ist und benachbarte Kreisel jeweils entgegengesetzt rotieren.

Auf dem Deckel 1b des Getriebekastens 1 sitzt ein Winkelgetriebe 6, aus dem bezüglich der durch den Pfeil F symbolisierten Fahrtrichtung nach vorne ein Wellenstummel 7 herausragt, an den eine Gelenkwelle anschließbar ist, die zur Zapfwelle eines Schleppers führt. Das Winkelgetriebe ist mit der Welle des Kreisels 2c verbunden, von der aus dann alle anderen Werkzeugkreisel angetrieben werden.

An der Vorderseite des Getriebekastens 1 befinden sich zwei Zapfen 8 und 9 für den Anschluß von Unterlenkern eines Schlepper-Dreipunktgestänges. Diese Zapfen befinden sich an Platten 10, 11, die am Getriebekasten 1a angeschweißt sind. Auf dem Maschinengestell 1 ist ein insgesamt mit 12 bezeichneter Turm angeordnet, an dem der Oberlenker eines Schlepper-Dreipunktgestänges befestigbar ist.

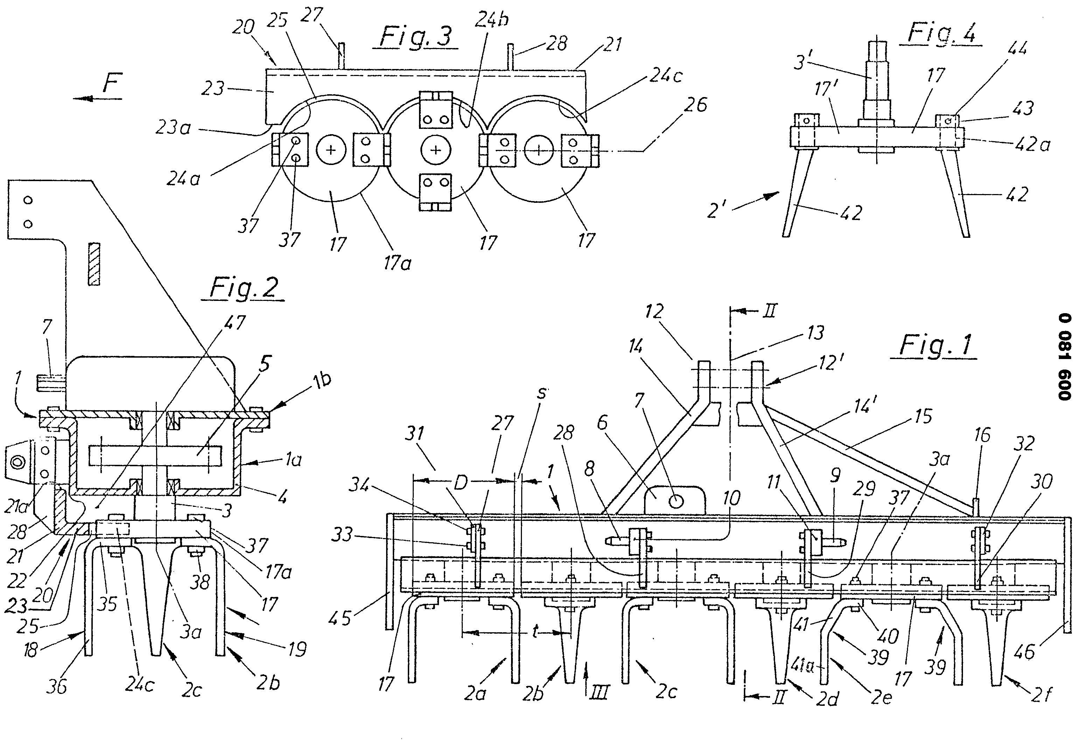

Bei der links von der Mittellinie 13 dargestellten Ausführungsform besteht der Turm aus zwei Platten 14, von denen in Fig. 1 naturgemäß nur eine dargestellt ist und die eine verhältnismäßig große Schräglage haben, damit das Maschinengestell möglichst weit außen von der Platte 14 erfaßt wird. Bei der rechts von der Mittellinie 13 gezeichneten Ausführungsform (dieser Turm ist mit 12' bezeichnet) sind die entsprechenden Platten 14' weniger stark nach außen gerichtet. Dafür ist eine Strebe 15 vorhanden, die mit ihrem oberen Ende in der Nähe des oberen Endes der Platte 14' und mit ihrem unteren Ende relativ weit außen am Maschinengestell 1 befestigt ist. Zur günstigen Einleitung der von der Strebe 15 ausgeübten Versteifungskräfte ist eine Brücke 16 vorgesehen.

An jedem Werkzeugkreisel befindet sich ein Werkzeugträger 17, der drehfest mit der Kreiselwelle 3 verbunden ist. Die Werkzeugträger 17 haben eine scheibenförmige Gestalt mit einer zylindrischen Außenfläche 17a. Die Rotationsfläche ist also bei der gezeichneten Ausführungsform eine Zylinderfläche. Der Durchmesser D der Werkzeugträger 17 ist nur wenig kleiner als der Teilungsabstand t zwischen benachbarten Kreiseln. Es besteht also nur ein schmaler Spalt s an der Stelle, an der sich benachbarte Werkzeugträger am nächsten kommen. Eine zweckmäßige Breite für diesen Spalt ist z. B. 10 mm.

Bei der gezeichneten Ausführungsform sind an jedem Werkzeugträger 17 zwei Zinken 18 und 19 befestigt. Für die Zinken sind insgesamt drei verschiedene Ausführungsformen dargestellt, die später erläutert werden.

An der Vorderseite des Gestells 1 ist ein insgesamt mit 20 bezeichneter Schutzschirm befestigt. Der Schutzschirm hat eine vertikale Wand 21, deren oberer Rand 21a ein wenig höher liegt als die untere vordere Kante 22 des Gestells 1. Die vertikale Wand 21 geht an ihrem unteren Ende in eine horizontale Anpassungswand 23 über. Die Anpassungswand 23 liegt auf Höhe der Werkzeugträger 17. Wie Fig. 3 zeigt, hat die Anpassungswand 23 kreisbogenförmige Aussparungen 24a, 24b, 24c, die an die Werkzeugträger 17 angepaßt sind, d. h. der Mittelpunkt der Kreisbögen, die die Ausbuchtungen definieren, fallen mit den geometrischen Achsen 3a der Werkzeugwellen 3 zusammen. Die Anpassung ist derart, daß zwischen den zylindrischen Außenflächen 17a der Werkzeugträger 17 und den Ausbuchtungen 24a, b, c nur ein relativ schmaler Spalt 25 vorhanden ist, der z. B. eine Breite von 7 mm aufweisen kann. Um zu vermeiden, daß durch den Spalt 25 eingedrungene feste Teilchen festgeklemmt werden, ist es zweckmäßig, die Breite des Spaltes 25 kleiner zu wählen als die lichte Höhe des Raumes 47 und die Breite des Spaltes s zwischen den Werkzeugträgern 17.

Das hintere Ende 23a der Anpassungswand endet vor der vertikalen Ebene, in der die geometrischen Achsen 3a liegen und die in Fig. 3 durch die strichpunktierte Linie 26 symboliert ist. Bei einem Durchmesser der Werkzeugträger 17, der wesentlich kleiner ist als der Teilungsabstand t zwischen benachbarten Kreiseln könnte die Wand auch über die Ebene 26 hinaus fortgesetzt werden, weil dann im Zwischenraum zwischen den Werkzeugträgern 17 genügend Platz für eine solche Fortsetzung der Wand vorhanden wäre.

An der vertikalen Wand 21 des Schutzschirmes sind Lappen 27 bis 30 angeschweißt, mit deren Hilfe der Schutzschirm am Maschinengestell 1 befestigt ist. Am Maschinengestell befinden sich zu diesem Zweck auch Lappen 31 und 32, an denen die Lappen 27 und 30 mittels Befestigungsschrauben 33 und 34 befestigt sind. Ausgenutzt werden auch die bereits erwähnten Ansätze 10 und 11, mit denen die Lappen 28 und 29 verbunden sind. Die Platte 14' und die Strebe 15 greifen oberhalb der Befestigungsstellen 11, 32 des Schutzschirmes 20 am Gestell 1 an. Dadurch werden auf den Schutzschirm 20 ausgeübte Stöße in die Maschinenaufhängung eingeleitet, wodurch der Getriebekasten 1 vor Deformationen geschützt wird.

Die in Fig. 2 dargestellten Zinken 18 und 19 sind winkelförmig ausgebildet. Ein kurzer Schenkel 35 jedes Zinkens liegt an der Unterseite des Werkzeugträgers an und ein langer Schenkel 36 verläuft parallel zur geometrischen Achse 3a der Welle 3. Zur Verbindung jedes Zinkens mit dem Werkzeugträger 17 dienen zwei Schrauben 37, die von oben durch den Werkzeugträger 17 hindurchgesteckt sind und auf die von unten eine Mutter 38 aufgeschraubt ist.

Die Zinken 39 des Kreisels 2e (siehe Fig. 1) haben einen oberen Befestigungsabschnitt 40, einen daran anschließenden übergangsabschnitt 41 und einen Arbeitsabschnitt 41a. Der Befestigungsabschnitt 40 ist wiederum mittels zwei Befestigungschrauben 37 mit dem Werkzeugträger 17 verbunden. Der Übergangsabschnitt 41 erstreckt sich von innen oben nach außen unten und der Arbeitsabschnitt 41a erstreckt sich parallel zur Kreiselwelle 3a.

Fig. 4 zeigt einen Werkzeugkreisel 2', der gerade Zinken 42 aufweist, die sich von oben innen nach unten außen erstrecken. Die Zinken haben obere Ansätze 42a, die den Werkzeugträger 17 durchgreifen und auf den eine Befestigungsmutter 43 aufgeschraubt ist, die mittels eines Querstiftes 44 gesichert ist.

Alle beschriebenen Zinken beschreiben zumindest mit ihren unteren Bereichen Kreisbahnen, deren Durchmesser größer ist als der Teilungsabstand t zwischen den Kreiseln, d.h. die Bewegungsbahnen überlappen sich. Dies ist möglich dank der Kupplung der Werkzeugkreisel untereinander durch die Zahnräder 5. Hierdurch erreicht man, daß die Zinken eines Kreisels in Zwischenräume zwischen den Zinken des anderen Kreisels gelangen, wodurch Kollisionen mit Sicherheit vermieden werden. Die beschriebenen Zinkenformen gestatten es auf einfache Weise, auch mit einem Träger, dessen diametrale Abmessungen notgedrungen kleiner sind als der Teilungsabstand t, die gewünschte Überlappung zu erreichen. Rechteckige Werkzeugträger können länger sein als der Teilungsabstand t.

An den seitlichen Enden des Maschinengestells sind Schutzschilde 45, 46 angeordnet, die ein seitliches Fortschleudern von Erde und von festen Stücken, wie Steinen, verhindern.

Die Arbeitsweise der Kreiselegge ergibt sich aus der vorstehenden Beschreibung weitgehend als selbstverständlich. Der Schutzschirm 20 bildet zusammen mit den scheibenförmigen Werkzeugträgern 17 eine sehr gute Abdeckung des Zwischenraumes 47 zwischen den Werkzeugträgern und dem Boden 4 des Getriebekastens 1, wobei das Eindringen von größeren festen Körpern in diesen Zwischenraum 47 mit Sicherheit vermieden wird ; durch den schmalen Spalt 25 evtl. eingedrungene Gegenstände von unschädlicher Größe werden nach hinten ausgeworfen. Die Werkzeugträger 17 sind von der Rückseite der Maschine her sehr leicht zugänglich. Vor allem können Zinken, die als Verschleißteile anzusehen sind und die bei steinigen Böden auch häufig beschädigt werden, sehr leicht ausgewechselt werden, da die Befestigungsschrauben 37 gut zugänglich sind. Auch eine Demontage der Werkzeugträger 17 insgesamt oder einer Werkzeugwelle 3 ist möglich, ohne daß der Schutzschirm abgenommen werden muß. Sollte der Schutzschirm einmal abgenommen werden müssen, so ist dies leicht möglich durch Entfernen der Verbindungsschrauben 33 und 34.

## Patentansprüche

1. Kreiselegge mit mehreren in einer quer zur Fahrtrichtung (F) verlaufenden Reihe angeordneten Werkzeugkreiseln (2a bis 2f ; 2'), die in einem Maschinengestell (1) gelagerte Wellen (3) aufweisen, an denen sich Zinken (18, 19 ; 39 ; 42) tragende Werkzeugträger (17) befinden, deren Umfangsfläche (17a) über mindestens einen Teil ihrer Höhe als Rotationsfläche ausgebildet ist, wobei am Maschinengestell (1) vor den Werkzeugträgern (17) ein die Werkzeugträger (17) abdeckender Schutzschirm (20) angeordnet ist, dadurch gekennzeichnet, daß der Schutzschirm (20) eine in der Ebene der Werkzeugträger (17) verlaufende Anpassungswand (23) aufweist, deren hinterer Rand bis nahe an die Rotationsflächen (17a) herangeführt ist und zu diesem Zweck kreisbogenförmige Ausbuchtungen (24a, 24b, 24c) aufweist, wobei die Anpassungswand (23) nur bis zu der Ebene (26) reicht oder vor der Ebene (26) endet, in der die geometrischen Achsen (3a) der Wellen (3) liegen und daß Befestigungselemente (37 ; 42a), z. B. Schrauben für die Zinken (18, 19 ; 39 ; 42) der Werkzeugträger (17 ; 17') diese durchgreifen.

2. Kreiselegge nach Anspruch 1, dadurch gekennzeichnet, daß die Rotationsfläche (17a) eine Zylinderfläche ist.

3. Kreiselegge nach einem der vorhergehenden Ansprüche, dadurch gekennzeichnet, daß die Werkzeugträger (17) scheibenförmig ausgebildet sind.

4. Kreiselegge nach einem der vorhergehenden Ansprüche, dadurch gekennzeichnet, daß der Abstand (s) zwischen zwei benachbarten Werkzeugträgern (17) im Bereich von 3 mm bis 25 mm liegt, vorzugsweise ca. 10 mm beträgt.

5. Kreiselegge nach einem der vorhergehenden Ansprüche, dadurch gekennzeichnet, daß der Spalt (25) zwischen der Anpassungswand (23) und den Rotationsflächen (17a) im Bereich von 5 mm bis 40 mm liegt, vorzugsweise ca. 7 mm beträgt.

6. Kreiselegge nach einem der vorhergehenden Ansprüche, dadurch gekennzeichnet, daß der Schutzschirm (20) als Winkelblech ausgebildet ist, dessen einer Schenkel (23) die Anpassungswand bildet und dessen anderer Schenkel (21) von der Anpassungswand (23) nach oben ragt, vorzugsweise mindestens bis zum unteren Rand (22) des Maschinengestells (1).

7. Kreiselegge nach einem der Ansprüche 1 bis 5, dadurch gekennzeichnet, daß die Anpassungswand an ein steifes Profil, z. B. ein Mehrkant-Hohlprofil, angeschweißt ist.

8. Kreiselegge nach einem der vorhergehenden Ansprüche, dadurch gekennzeichnet, daß der Schutzschirm (20) an der Vorderseite des Maschinengestells (1) befestigt ist, beispielsweise mittels mit dem Schutzschirm verschweißter Lappen (27, 28, 29, 30), die mit dem Maschinengestell (1) verschraubt sind, vorzugsweise an vom Maschinengestell (1) abragenden Lappen (10, 11, 31, 32).

9. Kreiselegge nach Anspruch 8, dadurch gekennzeichnet, daß am Schutzschirm (20) befindliche Lappen (28, 29) mit am Maschinengestell befindlichen Teilen (10, 11) verschraubt sind, die Zapfen (8, 9) für die Verbindung der Kreiselegge mit einem Schlepper-Dreipunktgestänge aufweisen.

10. Kreiselegge nach einem der vorhergehenden Ansprüche, dadurch gekennzeichnet, daß an den Werkzeugträgern (17), vorzugsweise lösbar, befestigte Zinken (18, 19 ; 39 ; 42) radial über den Werkzeugträger (17) vorragen.

11. Kreiselegge nach Anspruch 10, dadurch gekennzeichnet, daß die Zinken (18, 19 ; 39 ; 42) Bahnen beschreiben, deren Durchmesser größer ist als der Teilungsabstand (t) der Wellen (3) und daß in an sich bekannter Weise alle Wellen (3) antriebsmäßig derart miteinander gekuppelt sind, daß die Zinken (18, 19 ; 39 ; 42) eines Kreisels in die Lücken zwischen den Zinken eines benachbarten Kreisels eingreifen.

12. Kreiselegge nach einem der Ansprüche 10 und 11, dadurch gekennzeichnet, daß die Zinken (18, 19) winkelförmig ausgebildet sind, wobei ein kurzer horizontaler Schenkel (35) am Werkzeugträger (17) befestigt ist.

13. Kreiselegge nach einem der Ansprüche 10 und 11, dadurch gekennzeichnet, daß die Zinken (39) einen am Werkzeugträger (17) befestigten Befestigungsabschnitt (40), einen daran anschließenden, schräg nach unten außen ragenden Übergangsabschnitt (41) und einen etwa parallel zur Kreiselachse (3a) verlaufenden Arbeitsabschnitt (41a) aufweisen.

14. Kreiselegge nach einem der Ansprüche 10 und 11, dadurch gekennzeichnet, daß die Zinken (42) im wesentlichen gerade sind und ausgehend von ihrer Befestigungsstelle am Werkzeugträger (17') schräg von innen oben nach unten außen verlaufen.

15. Kreiselegge nach einem der vorhergehenden Ansprüche, dadurch gekennzeichnet, daß ausgehend von einem am Gestell (1) angeordneten Turm (12') für die Verbindung der Kreiselegge mit einem Schlepper-Dreipunktgestänge an jeder Seite des Turmes (12') mindestens eine Strebe (15) angeordnet ist, die mit einem Ende im oberen Bereich des Turmes (12') mit diesem verbunden ist und mit ihrem anderen Ende mit dem Gestell (1), vorzugsweise im Bereich der Befestigung (32) des Schutzschirmes (20) oder direkt an dieser Befestigung.

16. Kreiselegge nach einem der vorhergehenden Ansprüche, dadurch gekennzeichnet, daß der Spalt (25) zwischen der Anpassungswand (23) und den Rotationsflächen (17a) schmaler ist als die lichte Höhe des Raumes (47) zwischen den Werkzeugträgern (17) und der Unterseite des Gestells (1) und schmäler als der Spalt (s) zwischen den Werkzeugträgern (17).

## Claims

1. Rotary harrow having a plurality of rotary tools (2a to 2f ; 2'), which are arranged in a row extending transversely relative to the direction of travel (F) and which comprise shafts (3) mounted in a machine frame (1), the said shafts having tool supports (17) bearing prongs (18, 19 ; 39, 42), the peripheral surface (17a) of the said tool supports being formed across at least a portion of its height as a rotary surface, a guard (20) which covers the tool supports (17) being arranged on the machine frame (1) in front of the tool supports (17), characterised in that the guard (20) comprises an accomodating wall (23) extending in the plane of the tool supports (17), the rear edge of which wall is extended close to the rotary surfaces (17a) and comprises to this end circular cutouts (24a, 24b, 24c), the accomodating wall (23) extending only as far as the plane (26) or ending in front of the plane (26) in which the geometrical axes (3a) of the shafts are located, and fastening elements (37 ; 42a), e.g. screws, for the prongs (18, 19 ; 39 ; 42) of the tool supports (17 ; 17') pass through the said tool supports.

2. Rotary harrow according to claim 1, characterised in that the rotary surface (17a) is a cylindrical surface.

3. Rotary harrow according to any one of the preceding claims, characterised in that the tool supports (17) are formed in the shape of discs.

4. Rotary harrow according to any one of the preceding claims, characterised in that the distance (s) between two adjacent tool supports (17) is in the region of 3 mm to 25 mm, preferably approximately 10 mm.

5. Rotary harrow according to any one of the preceding claims, characterised in that the gap (25) between the accomodating wall (23) and the rotary surfaces (17a) is in the region of 5 mm to 40 mm, preferably approximately 7 mm.

6. Rotary harrow according to any one of the preceding claims, characterised in that the guard (20) is formed as an angle plate, one leg (23) of which forms the accomodating wall and the other leg (21) of which extends upwards from the accomodating wall (23), preferably at least as far as the lower edge (22) of the machine frame (1).

7. Rotary harrow according to any one of the claims 1 to 5, characterised in that the accomodating wall is welded to a rigid profile, e.g. a polyhedral hollow profile.

8. Rotary harrow according to any one of the preceding claims, characterised in that the guard (20) is secured to the front side of the machine frame (1), for example by means of flanges (27, 28, 29, 30), which are welded to the guard and are screwed onto the machine frame (1), preferably on flanges (10, 11, 31, 32) projecting from the machine frame (1).

9. Rotary harrow according to claim 8, characterised in that flanges (28, 29) arranged on the guard (20) are screwed onto parts (10, 11) arranged on the machine frame, which parts comprise journals (8, 9) for connecting the rotary harrow to a three-point linkage of a tractor.

10. Rotary harrow according to any one of the preceding claims, characterised in that prongs (18, 19 ; 39 ; 42) which are preferably detachably secured to the tool supports (17), project radially beyond the said tool supports.

11. Rotary harrow according to claim 10, characterised in that the prongs (18, 19 ; 39 ; 42) describe paths, the diameter of which is greater than the distance (t) between the shafts (3), and in a manner known per se all shafts (3) are coupled with respect to the drive means such that the prongs (18, 19 ; 39 ; 42) of one rotary element engage in the spaces between the prongs of an adjacent rotary element.

12. Rotary harrow according to claim 10 or 11, characterised in that the prongs (18, 19) are angular, a shorter horizontal leg (35) being secured to the tool support (17).

13. Rotary harrow according to claim 10 or 11, characterised in that the prongs (39) comprise a mounting section (40) which is secured to the tool support (17), an adjoining transition section (41), which projects downwards at an angle towards the outside, and a working section (41a) which extends approximately parallel to the axis (3a) of the rotary element.

14. Rotary harrow according to claim 10 or 11, characterised in that the prongs (42) are substantially straight and extend from their securing point on the tool support (17') downwards at an angle towards the outside.

15. Rotary harrow according to any one of the preceding claims, characterised in that, extending from a turret (12') arranged on the frame (1) for connecting the rotary harrow to a three-point linkage of a tractor, at least one strut (15) is arranged on each side of the said turret (12') and is connected at one end to the upper region of the funnel (12') and at its other end to the frame (1), preferably in the region of the mounting (32) of the guard (20) or directly on the said mounting.

16. Rotary harrow according to any one of the preceding claims, characterised in that the gap (25) between the accomodating wall (23) and the rotary surfaces (17a) is narrower than the vertical clearance of the space (47) between the tool supports (17) and the underside of the frame (1) and narrower than the gap (s) between the tool supports (17).

**Revendications**

1. Herse rotative à plusieurs rotors à outils (2a à 2f ; 2') disposés en une rangée transversale par rapport à la direction (F) d'avancement, ces rotors comportent des arbres (3) supportés dans un châssis de machine (1) et sur lesquels sont montés des porte-outils (17) portant des dents (18, 19 ; 39 ; 42) et la surface périphérique (17a) de ces porte-outils constituant au moins sur une partie de leur hauteur, une surface de révolution, et un écran protecteur (20), qui couvre les porte-outils (17), étant disposé sur le châssis de machine (1) en avant des porte-outils (17), caractérisé en ce que l'écran protecteur (20) comporte une paroi ajustée (23) qui s'étend dans le plan des porte-outils et dont le bord arrière aboutit près desdites surfaces de révolution (17a) et présente dans ce but des échancrures (24a, 24b, 24c) en forme d'arc de cercle, la paroi ajustée ne s'étendant que jusqu'au plan (26) dans lequel se trouvent les axes géométriques (3a) des arbres (3) ou s'arrêtant avant ce plan, et en ce que des éléments de fixation (37 ; 42a), par exemple des vis, pour les dents (18, 19 ; 39 ; 42) aux porte-outils (17 ; 17'), traversent ces derniers.

2. Herse rotative selon la revendication 1, caractérisée en ce que la surface de révolution (17a) est cylindrique.

3. Herse rotative selon l'une des revendications précédentes, caractérisée en ce que les porte-outils (17) ont la forme de disques.

4. Herse rotative selon l'une des revendications précédentes, caractérisée en ce que l'écartement (s) entre deux porte-outils (17) est compris dans la gamme de 3 mm à 25 mm et est de préférence d'environ 10 mm.

5. Herse rotative selon l'une des revendications précédentes, caractérisée en ce que l'intervalle (25) compris entre la paroi ajustée (23) et les surfaces de révolution (17a) se trouve dans la gamme de 5 à 40 mm, et est de préférence d'environ 7 mm.

6. Herse rotative selon l'une des revendications précédentes, caractérisée en ce que l'écran protecteur est constitué par une tôle pliée, dont une aile (23) forme la paroi ajustée et dont l'autre aile (21) avance vers le haut à partir de la paroi ajustée (23), de préférence au moins jusqu'au bord inférieur (22) du châssis de machine (1).

7. Herse rotative selon l'une des revendications 1 à 5, caractérisée en ce que la paroi ajustée est soudée à une pièce profilée rigide, par exemple une pièce profilée polygonale creuse.

8. Herse rotative selon l'une des revendications précédentes, caractérisée en ce que l'écran protecteur (20) est fixé au côté avant du châssis de machine, par exemple au moyen de pattes (27, 28, 29, 30), soudées à l'écran protecteur, qui sont vissées sur le châssis de machine (1), de préférence sur des pattes (10, 11, 31, 32) en saillie sur le châssis de machine (1).

9. Herse rotative selon la revendication 8, caractérisée en ce que des pattes (28, 29), se trouvant sur l'écran protecteur (20), sont vissées sur des parties (10, 11) se trouvant sur le châssis de machine, lesquelles parties comportent des tétons pour l'attelage de la herse à une suspension trois points d'un tracteur.

10. Herse rotative selon l'une des revendications précédentes, caractérisée en ce que des dents (18, 19 ; 39 ; 42), fixées sur le porte-outils de préférence de façon amovible, font saillie radialement par rapport audit porte-outils.

11. Herse rotative selon la revendication 10, caractérisée en ce que les dents décrivent des trajectoires dont le diamètre est plus grand que l'écartement (t) entre les arbres (3), et en ce que, d'une façon connue en soi, tous les arbres (3) sont couplés les uns aux autres pour l'entraînement, de façon que les dents (18, 19 ; 39 ; 42) d'un rotor s'engagent dans les intervalles entre les dents d'un rotor voisin.

12. Herse rotative selon l'une des revendications 10 et 11, caractérisée en ce que les dents (18, 19) ont une forme coudée, dont une branche horizontale courte (35) est fixée au porte-outils (17).

13. Herse rotative selon l'une des revendications 10 et 11, caractérisée en ce que les dents (39) comportent une portion de fixation (40) fixée au porte-outils, une portion de transition (41) se rattachant à la précédente et faisant saillie obliquement vers l'extérieur et vers le bas, et une portion de travail (41a) sensiblement parallèle à l'axe du rotor (3a).

14. Herse rotative selon l'une des revendications 10 et 11, caractérisée en ce que les dents (42) sont principalement droites et dirigées obliquement, en partant de leur emplacement de fixation sur le porte-outils (17'), en allant de l'intérieur en haut vers l'extérieur en bas.

15. Herse rotative selon l'une des revendications précédentes, caractérisée en ce que, partant d'une tourelle (12') disposée sur le châssis (1), pour l'accrochage de la herse rotative sur une suspension trois points d'un tracteur, il est disposé de chaque côté de la tourelle (12') au moins une jambe de force (15) qui est reliée par une extrémité dans la région supérieure de la tourelle (12') à celle-ci, et par son autre extrémité, au châssis (1), de préférence dans la région de la fixation (32) de l'écran protecteur (20) ou directement à cette fixation.

16. Herse rotative selon l'une des revendications précédentes, caractérisée en ce que l'intervalle (25) compris entre la paroi ajustée (23) et les surfaces de révolution (17a) est plus étroit que la hauteur libre de l'espace (47) compris entre les porte-outils et le côté inférieur du châssis (1) et plus étroit que l'intervalle (s) entre les porte-outils (17).

Fig. 1

Fig. 2

Fig. 3

Fig. 4